# FASCICULE DE BREVET EUROPEEN

(11) **EP 1 255 963 B1**
(45) Date de publication et mention de la délivrance du brevet: **18.08.2004**
(21) Numéro de dépôt: 01907723.9
(22) Date de dépôt: 07.02.2001
(51) Int. Cl.: G01C 19/56

(54) **CAPTEUR GYROSCOPIQUE**
KREISELSENSOR
GYROSCOPIC SENSOR

(30) Priorité: 15.02.2000 FR 0001847
(43) Date de publication de la demande: 13.11.2002
(73) Titulaire: SAGEM SA, 75016 Paris (FR)
(72) Inventeur: JEANROY, Alain, F-78700 Conflans Sainte Honorine (FR)
(74) Mandataire: Gorrée, Jean-Michel
(86) Numéro de dépôt international: PCT/FR2001/000357
(87) Numéro de publication internationale: WO 2001/061279

(56) Documents cités:
- US-A- 4 951 508

## Description

La présente invention concerne des perfectionnements apportés aux capteurs gyroscopiques comprenant :
- un élément sensible auquel sont associées des électrodes de détection et d'excitation,
- des tiges conductrices raccordées notamment auxdites électrodes,
- un boîtier protecteur qui renferme l'élément sensible et les électrodes et qui possède des traversées isolantes pour les tiges conductrices, et
- des moyens de support interposés entre l'élément sensible et les électrodes, d'une part, et le boîtier, d'autre part.

Les capteurs gyroscopiques font appel, pour l'obtention de bonnes performances, à des pièces composantes ayant une géométrie rigoureuse, et à des assemblages d'une précision extrême ; cela se traduit par des tolérances dimensionnelles très réduites et par des jeux très faibles.

Or certaines au moins de ces pièces composantes peuvent être réalisées dans des matériaux divers, qui peuvent présenter des coefficients de dilatation thermique forts différents. Il en résulte des difficultés considérables pour assurer le maintien des performances requises du capteur gyroscopique dans des conditions thermiques environnantes variables, ce qui exige des assemblages propres à laisser les pièces composantes se dilater là où cela est nécessaire tout en respectant les valeurs précises de jeux, d'intervalles ou d'entrefers, ou en respectant les valeurs limites de contraintes acceptables par les pièces composantes.

Par ailleurs, l'élément sensible du capteur gyroscopique est un organe extrêmement fragile et très sensible aux chocs mécaniques et il est souhaitable qu'il soit supporté en étant découplé, autant que faire se peut, vis-à-vis des chocs mécaniques.

Ces difficultés se rencontrent, par exemple, pour les capteurs gyroscopiques dont l'élément sensible est un résonateur en quartz possédant une ou plusieurs branches vibrantes et dont les électrodes de détection et d'excitation sont des métallisations déposées directement sur ces branches. Dans ce type de réalisation, on utilise le caractère piézo-électrique du quartz pour réaliser les fonctions d'excitation et de détection.

Ces difficultés se rencontrent tout particulièrement, dans les capteurs gyroscopiques à résonateur en cloche ou en calotte, qui connaissent actuellement un grand développement. Dans ce type de résonateur, le bord du résonateur en forme de cloche ou de calotte, excité suivant un mode de vibration provoquant sa déformation avec des composantes radiales et tangentielles, présente également une composante de déplacement parallèle à l'axe du résonateur. On connaît ainsi de tels capteurs gyroscopiques dans lesquels on détecte la vibration radiale du bord du résonateur - dans ce cas la cloche ou calotte du résonateur coiffe au moins partiellement la plaque porte-électrodes - (voir par exemple US 4 951 508) et des capteurs gyroscopiques dans lesquels on détecte la vibration axiale du bord du résonateur - dans ce cas la plaque porte-électrodes fait face au bord de la cloche ou calotte du résonateur - (voir par exemple FR 99 05204).

Des résonateurs connus de ce type, qui pouvaient posséder à l'origine des diamètres de l'ordre de 60 mm, ont vu leur dimension pouvoir être ramenée à environ 30 mm pour des applications spatiales à hautes performances.

De plus en plus, il est envisagé d'utiliser des capteurs gyroscopiques à résonateur en cloche pour des applications moins performantes et avec un coût de production beaucoup plus faible, telles que par exemple le pilotage de missiles tactiques. Ces applications se caractérisent souvent par la nécessité de placer un bloc senseur (gyroscopes et accéléromètres) dans un faible volume, avec des environnements thermiques et mécaniques sévères. Les gyroscopes vibrants possèdent de bonnes qualités pour de telles applications de par leur faible nombre de pièces et leur robustesse intrinsèque.

L'élément clé de la performance d'un gyroscope à résonateur en cloche est la surtension du résonateur obtenue par l'utilisation de la silice pour constituer la cloche vibrante. A ce jour, la silice est le seul matériau possédant les qualités nécessaires pour la réalisation d'un résonateur avec des surtensions supérieures à un ordre de grandeur de plusieurs 10⁶.

Par contre, la silice a une propriété qui, tout en étant favorable à la stabilité des performances des gyroscopes, apporte une difficulté pour la réalisation : son coefficient de dilatation est extrêmement faible, de l'ordre de 0,5 ppm/°C. Or, les gyroscopes sont fixés sur des coeurs en matériaux métalliques, souvent en aluminium, avec un coefficient de dilatation de 23 ppm/°C. Il est donc nécessaire d'utiliser une architecture particulière permettant d'assurer la transition entre la silice et le matériau métallique du coeur, pour que des variations de températures ne perturbent pas le fonctionnement du gyroscope.

La mise en oeuvre du résonateur est réalisée de façon électrostatique et la détection est capacitive, ce qui nécessite, pour une bonne efficacité, de réaliser de faibles entrefers (quelques dizaines de µm). Il est très important de limiter les variations d'entrefers provoquées par des dilatations différentielles entre matériaux et des déformations de pièces. Cela conduit classiquement à l'utilisation d'assemblages possédant un degré de liberté (par exemple glissement sur un plan comme dans le dispositif du document US 4 951 508) ou de pièces élastiques.

Pour les nouvelles applications envisagées mettant en oeuvre un résonateur en cloche, les environnements sont de plus en plus sévères : domaine thermique de -40 à +90°C, tenue à des chocs provoquant des accélérations de plusieurs centaines de g. De plus, le volume disponible est de plus en plus faible, ce qui conduit à s'orienter vers des résonateurs dont la cloche possède un diamètre encore plus réduit qui, pour les applications prévues actuellement par exemple, est de l'ordre de 20 mm.

Dans de telles conditions, les solutions classiques ne sont plus adaptées.

Le but de la présente invention est donc de proposer une nouvelle architecture de capteur gyroscopique, notamment à résonateur en cloche, qui assure la stabilité dimensionnelle des éléments sensibles du gyroscope dans des environnements thermiques et/ou mécaniques sévères et qui, notamment, permette l'utilisation de résonateurs en cloche de petits diamètres souhaités par la pratique.

A ces fins, un capteur gyroscopique tel que mentionné au préambule se caractérise, étant agencé conformément à l'invention, en ce que lesdits moyens de support sont constitués par les tiges conductrices elles-mêmes qui sont réalisées élastiquement déformables.

Dans le cas où il s'agit d'un capteur gyroscopique à résonateur en cloche ou en calotte, le capteur agencé selon l'invention comprend en outre :
- un résonateur en forme de cloche ou de calotte de révolution possédant un axe de fixation,
- une pièce porte-électrodes qui porte lesdites électrodes de détection et d'excitation, coopérant avec le résonateur, et qui supporte le résonateur par son axe de fixation,
- ledit boîtier protecteur renfermant le résonateur et la pièce porte-électrodes,
et lesdites tiges conductrices formant les moyens de support sont interposées entre la pièce porte-électrodes et le boîtier.

Grâce à un tel agencement, les assemblages mécaniques à surfaces portantes - qui sont susceptibles de frotter les uns contre les autres sous l'influence des conditions extérieures (température, vibrations, ...) et de provoquer des dissipations d'énergie propres à dégrader la surtension du résonateur et donc la précision du gyroscope - ont été purement et simplement éliminés. La fonction de support est désormais dévolue à des organes - les tiges conductrices - qui étaient déjà présents et dont la présence est de toute manière nécessaire pour la connexion électrique du résonateur.

La dualité de fonction désormais dévolue aux tiges conductrices permet d'éliminer des causes de perturbation du fonctionnement correct du gyroscope, permet de gagner de la place en raison de la suppression d'organes désormais superflus et autorise donc la réalisation de dispositifs de plus faibles diamètres, et permet de réduire le coût de revient unitaire des dispositifs.

Avantageusement dans le cas des résonateurs en cloche, les tiges conductrices raccordées aux électrodes sont réparties symétriquement et circulairement autour de l'axe du résonateur.

Toujours avantageusement dans le même cas, le capteur peut comporter en outre trois tiges conductrices réparties symétriquement au voisinage de l'axe du résonateur, une de ces tiges étant raccordée à un anneau de garde prévu sur la plaque porte-électrodes et une autre tige étant reliée à une métallisation du résonateur ; quant à la troisième tige conductrice, elle peut n'avoir d'autre utilité que d'être présente et de contribuer au support de la plaque porte-électrodes, sa présence permettant d'éviter une inclinaison de la plaque porte-électrodes par rapport au boîtier du gyroscope.

Dans un mode de réalisation particulier, le boîtier comprend une embase métallique et un capot solidaire de celle-ci, et l'embase est munie des susdites traversées isolantes pour les tiges conductrices.

En définitive, les dispositions adoptées conformément à l'invention conduisent aux avantages suivants :
- montage suspendu de l'élément sensible du gyroscope, avec une fréquence de coupure facilement ajustable, et une possibilité de mouvement de translation parallèle de l'axe sensible du gyroscope, sans inclinaison de cet axe qui soit préjudiciable à la précision du gyroscope ;
- montage autorisant l'utilisation de résonateurs à détection radiale aussi bien que de résonateurs à détection axiale ;
- liaisors mécanique et électriques réalisées par les mêmes éléments, ce qui simplifie le montage et réduit les coûts ;
- déformations liées au choc ou à la température localisées dans les tiges conductrices, sans répercussion sur les entrefers servant à la mise en oeuvre du résonateur ;
- embase du gyroscope réalisée dans le même matériau que le support du gyroscope, ce qui supprime les contraintes dues à la température dans la fixation du gyroscope.

Cette architecture est très bien adaptée à la réalisation de gyroscopes, notamment à des résonateurs en cloche de faibles dimensions, utilisables dans des environnements mécanique et thermique sévères. Elle peut également être utilisée sur des gyroscopes de plus grande dimension, avec des environnements moins sévères, les dilatations différentielles étant d'autant plus pénalisantes que les dimensions sont importantes.

L'invention sera mieux comprise à la lecture de la description détaillée qui suit de certains modes de réalisation donnés uniquement à titre d'exemples illustratifs. Dans cette description, on se réfère au dessin annexé sur lequel :
- la figure 1 est une vue en coupe schématique de côté d'un mode de réalisation d'un capteur gyroscopique à résonateur en cloche agencé conformément à l'invention ;
- la figure 2 est une vue en coupe schématique de côté d'un autre mode de réalisation d'un capteur gyroscopique à résonateur en cloche agencé conformément à l'invention ;
- la figure 3 est une vue de dessus de la plaque porte-électrodes du résonateur de la figure 2 ;
- les figures 4 et 5 sont des vues partielles illustrant la capacité des tiges conductrices des capteurs gyroscopiques agencés selon l'invention à absorber des efforts déformants ; et
- la figure 6 est une vue partielle illustrant une variante de réalisation d'une partie des capteurs gyroscopiques des figures 1 et 2.

La description qui suit se rapporte plus particulièrement aux capteurs gyroscopiques à résonateur en cloche ou en calotte car les dispositions de l'invention trouvent une application particulièrement intéressante dans ce type de capteur gyroscopique, notamment ceux équipés de résonateur de petit diamètre, étant entendu toutefois que ces dispositions s'appliquent également à tout type de capteur gyroscopique pour le support de l'élément sensible.

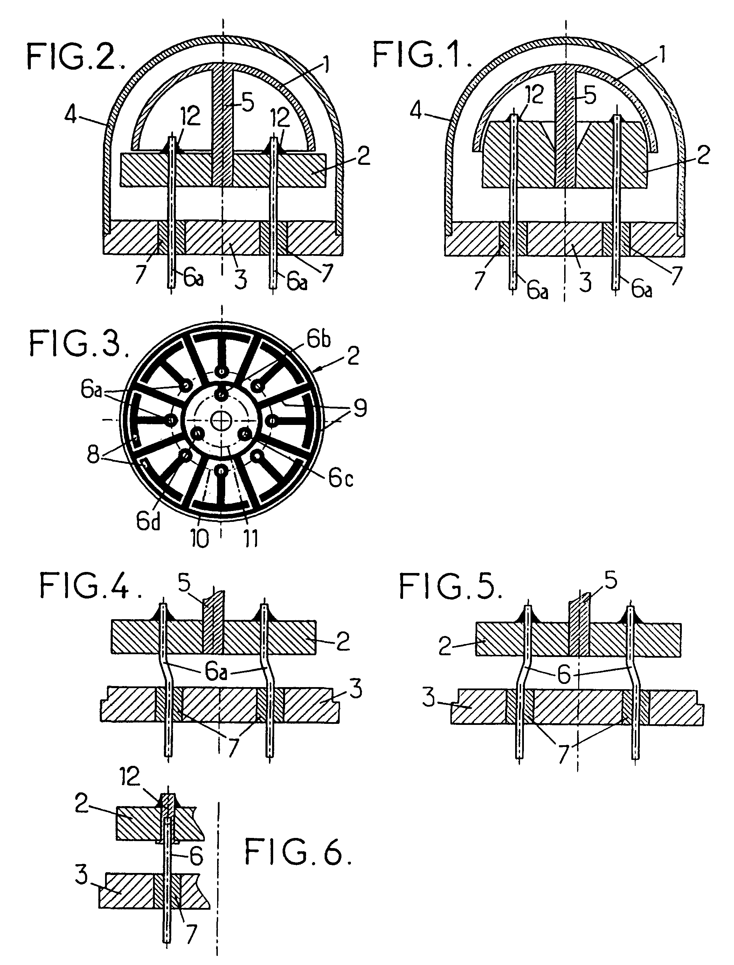

En se reportant tout d'abord aux figures 1 et 2, un capteur gyroscopique à résonateur en cloche ou en calotte possède quatre éléments principaux :
- un résonateur en cloche ou en calotte 1, qui peut être notamment de forme hémisphérique comme illustré et qui possède un axe 5 pour sa fixation ;
- une pièce portant les électrodes nécessaires à la mise en oeuvre du résonateur, dite ci-après porte-électrodes 2, dans laquelle est également ancré l'axe du résonateur 1 (les électrodes ne sont pas visibles sur les figures 1 et 2) ;
- une embase 3 permettant la fixation du gyroscope sur un support ; et
- un capot 4.

Le résonateur 1 et la pièce porte-électrodes 2 sont réalisés en silice pour assurer la stabilité des entrefers, la silice étant un matériau imposé pour le résonateur.

La pièce porte-électrodes 2 peut avoir différentes configurations. Elle peut être hémisphérique, avec des électrodes placées en regard de la face interne du résonateur, comme illustré à la figure 1. Elle peut également être plane, avec des électrodes placées en face de la tranche du résonateur, comme illustré à la figure 2.

Le résonateur 1 et la pièce porte-électrodes 2 sont assemblés pour former l'élément sensible du gyroscope. Les entrefers dans ces deux pièces sont de quelques dizaines de µm. Ce sous-ensemble est fixé mécaniquement à l'embase 3 grâce à des moyens de support. Le capot 4 est ensuite mis en place pour permettre le fonctionnement du résonateur sous vide secondaire. Des liaisons électriques 6 sont réalisées entre les électrodes et l'électronique de mise en oeuvre située à l'extérieur du gyroscope. Ces liaisons passent par des traversées étanches et électriquement isolantes 7 prévues dans l'embase 3.

En général l'embase 3 est métallique, avec un coefficient de dilatation qui peut être soit proche de celui de la silice, soit proche de celui du matériau du support sur lequel va être fixé le gyroscope. Dans tous les cas, il va y avoir dilatation différentielle entre l'embase 3 et une des pièces avec laquelle elle est assemblée. Il est impératif que les contraintes induites par cette dilatation différentielle ne perturbent pas l'assemblage résonateur/pièce porte-électrodes, soit en créant des variations d'entrefer en fonction de la température, soit en générant des contraintes trop élevées dans la silice. La tenue de la silice aux contraintes de traction est très faible par rapport à celle d'un matériau métallique.

Pour réaliser l'assemblage des différentes pièces composantes, les moyens de support précités sont, conformément à la présente invention, constitués par les liaisons électriques 6 susmentionnées. Autrement dit, les pièces composantes précitées étant mécaniquement solidarisées deux par deux, les liaisons électriques 6 servent à supporter l'ensemble résonateur 1/pièce porte-électrodes 2 sur l'ensemble formé par l'embase 3 dont est solidaire le capot 4.

Comme montré à la figure 3, la pièce porte-électrodes possède plusieurs électrodes (par exemple 8, comme illustré) constituées par un dépôt métallique de faible épaisseur, placées en regard du résonateur, et permettant sa mise en oeuvre. Dans le cas du résonateur de la figure 1, les électrodes exploitent les déformations radiales du résonateur. Dans le cas du résonateur de la figure 2, elles en exploitent les déformations axiales. Ces deux configurations permettent d'exploiter les mêmes modes de vibrations. La masse de l'élément sensible ainsi constitué est de quelques grammes, grâce à l'utilisation de silice.

En se référant simultanément aux figures 1 et 2 et à la figure 3, l'embase 3 du gyroscope est une pièce circulaire qui porte onze traversées 7 étanches et isolantes à travers lesquelles sont engagées des tiges conductrices respectives 6 propres à assurer les liaisons électriques précitées :
- huit tiges 6a (illustrées sur les figures 1 et 2) servent à conduire les signaux issus des électrodes 8 de la pièce porte-électrodes 2,
- une tige 6b (non montrée sur les figures 1 et 2) assure la liaison de l'anneau de garde 9 séparant les électrodes,
- une tige 6c assure la liaison (non montrée) de la métallisation du résonateur,
- la dernière tige 6d n'a pas de fonction électrique ; elle sert uniquement à assurer la stabilité de l'orientation de la pièce porte-électrodes.

Les huit tiges 6a connectées aux électrodes 8 sont placées sur un cercle 10. Les trois tiges supplémentaires 6b, 6c, 6d sont placées concentriquement (cercle 11) à l'intérieur des huit premières, sur les sommets d'un triangle équilatéral.

Chaque traversée étanche et isolante 7 est réalisée de façon classique par scellement dans l'embase 3 d'une tige métallique 6 avec du verre. L'embase 3 est réalisée avec le même matériau que le support sur lequel va être fixé le gyroscope.

Les extrémités des onze tiges métalliques 6 sont fixées sur la pièce porte-électrodes 2 par brasage (en 12) sur le dépôt métallique réalisé sur la silice. On obtient ainsi l'équivalent d'un montage sur "pilotis" de la pièce porte-électrodes 2, qui autorise une translation parallèle de cette pièce par rapport à l'embase 3. Cette translation est obtenue par déformation de la partie libre des tiges métalliques 6. Dans le cas d'accélérations ou de choc parallèle au plan de l'embase 3, on obtient la déformation présentée figure 4. Dans le cas de dilatations thermiques, la déformation est celle montrée à la figure 5.

En modifiant la longueur et le diamètre de la partie libre des tiges métalliques 6, il est possible de régler précisément la souplesse du support pour localiser les déformations dans les tiges métalliques et limiter la transmission de contraintes à la pièce porte-électrodes 2, que ce soit sous l'effet de chocs mécaniques ou de dilatations thermiques. Contrôler le diamètre et la longueur de tiges métalliques discrètes est plus facile que par exemple contrôler l'épaisseur d'une pièce continue qui aurait la même raideur.

Ainsi, le résonateur 1 et la pièce porte-électrodes 2 constituent un ensemble rigide, isolé de l'extérieur par la suspension réalisée par les tiges métalliques 6. La fréquence propre de cette suspension peut être placée entre la fréquence maximale des vibrations extérieures et la fréquence nominale de fonctionnement du résonateur 1, ce qui va filtrer les perturbations transmises au résonateur. De même, en cas de déséquilibre dynamique du résonateur, cette suspension va filtrer la transmission d'énergie vers l'extérieur.

Les figures proposées ne sont pas limitatives. Les liaisons entre les tiges métalliques 6 et la pièce porte-électrodes 2 peuvent être réalisées de différentes façons, par exemple par brasure ou collage conducteur. Il est également possible d'utiliser des inserts intermédiaires 12, par exemple en Invar, fixés dans la pièce en silice, comme illustré à la figure 6. Le nombre de tiges métalliques peut être modifié en fonction du nombre d'électrodes ou des liaisons internes réalisées entre les électrodes. Il est seulement nécessaire de respecter une symétrie la plus complète possible, pour éviter un basculement de l'élément sensible par rapport à l'embase et garantir une translation parallèle, ce qui conserve la direction de l'axe d'entrée (axe de mesure) du gyroscope et n'introduit pas de mouvements coniques qui sont source de dérive pour un gyroscope.

Les tiges métalliques 6 doivent, dans le cadre de la présente invention, être constituées en un matériau ou ensemble de matériaux qui non seulement est bon conducteur électrique pour assurer la fonction de conduction électrique, mais qui aussi possède un bon coefficient d'élasticité afin d'être propre à assurer la fonction de support mécanique dans les conditions requises qui ont été exposées. Des tiges constituées par exemple en un alliage fer-nickel ou en un alliage fer-cobalt (par exemple celui commercialisé sous la référence VACON CF25 par la société Vacuumschmelze GmbH) répondent à cette double exigence.

## Revendications

1. Capteur gyroscopique comprenant :
- un élément sensible (1) auquel sont associées des électrodes de détection et d'excitation (8),
- des tiges conductrices (6) raccordées notamment auxdites électrodes (8),
- un boîtier protecteur (3, 4) qui renferme l'élément sensible (1) et les électrodes (8) et qui possède des traversées isolantes (7) pour les tiges conductrices (6), et
- des moyens de support interposés entre l'élément sensible (1) et les électrodes (8), d'une part, et le boîtier (3, 4), d'autre part,
**caractérisé en ce que** lesdits moyens de support sont constitués par les tiges conductrices (6) elles-mêmes qui sont réalisées élastiquement déformables.

2. Capteur gyroscopique selon la revendication 1, **caractérisé en ce qu'**il comprend :
- un résonateur (1) en forme de cloche ou de calotte de révolution possédant un axe de fixation (5),
- une pièce porte-électrodes (2) qui porte lesdites électrodes de détection et d'excitation (8), coopérant avec le résonateur (1), et qui supporte le résonateur (1) par son axe de fixation (5),
- ledit boîtier protecteur (3, 4) renfermant le résonateur (1) et la pièce porte-électrodes (2),
et **en ce que** lesdites tiges conductrices (6) formant les moyens de support sont interposées entre la pièce porte-électrodes (2) et le boîtier (3, 4).

3. Capteur gyroscopique selon la revendication 2, **caractérisé en ce que** les tiges conductrices (6a) raccordées aux électrodes (8) sont réparties symétriquement et circulairement (10) autour de l'axe (5) du résonateur (1).

4. Capteur gyroscopique selon la revendication 2 ou 3, **caractérisé en ce qu'**il comporte en outre trois tiges conductrices (6b, 6c, 6d) réparties symétriquement au voisinage de l'axe (5) du résonateur (1), une de ces tiges (6b) étant raccordée à un anneau de garde (9) prévu sur la plaque porte-électrodes (2) et une autre tige (6c) étant reliée à une métallisation du résonateur (1).

5. Capteur gyroscopique selon l'une quelconque des revendications précédentes, **caractérisé en ce que** le boîtier (3, 4) comprend une embase métallique (3) et un capot (4) solidaire de celle-ci, et **en ce que** l'embase (3) est munie des susdites traverses isolantes (7) pour les tiges conductrices.

## Patentansprüche

1. Kreiselsensor mit
einem Fühlelement (1), dem Elektroden (8) zur Detektion und Anregung zugeordnet sind,
Leitstiften (6), die insbesondere mit diesen Elektroden (8) verbunden sind,
einem Schutzgehäuse (3, 4), das das Fühlelement (1) und die Elektroden (8) umschließt und das isolierende Durchführungen (7) für die Leitstifte (6) aufweist, und
Stützmittel, die zwischen dem Fühlelement (1) und den Elektroden (8) einerseits und dem Gehäuse (3, 4) andererseits eingesetzt sind;
**dadurch gekennzeichnet, dass**
die Stützmittel durch die Leitstifte (6) selbst gebildet sind, die elastisch verformbar ausgebildet sind.

2. Kreiselsensor nach Anspruch 1, **dadurch gekennzeichnet, dass** er enthält:
einen Resonator (1) in Form einer Drehglocke oder -Kalotte mit einer Befestigungsachse (5),
ein Elektrodenträgerteil (2), das die Elektroden (8) zur Detektion und Anregung trägt, die mit dem Resonator (1) zusammenwirken, und das den Resonator (1) über seine Befestigungsachse stützt,
wobei das Schutzgehäuse (3, 4) den Resonator (1) und das Elektrodenträgerteil (2) umschließt; und
dass die Leitstifte (6), die die Stützmittel bilden, zwischen dem Elektrodenträgerteil (2) und dem Gehäuse (3, 4) eingesetzt sind.

3. Kreiselsensor nach Anspruch 2, **dadurch gekennzeichnet, dass**
die mit den Elektroden (8) verbundenen Leitstifte (6) symmetrisch und kreisförmig (10) um die Achse (5) des Resonators (1) verteilt sind.

4. Kreiselsensor nach Anspruch 2 oder 3, **dadurch gekennzeichnet, dass**
er weiter drei Leitstifte (6b, 6c, 6d) aufweist, die symmetrisch in der Nähe der Achse (5) des Resonators (1) verteilt sind,
wobei einer dieser Stifte (6b) mit einem Schutzring (9) verbunden ist, der auf der Elektrodenträgerplatte (2) vorgesehen ist, und
ein anderer Stift (6c) mit einer Metallisierung des Resonators (1) verbunden ist.

5. Kreiselsensor nach einem der vorigen Ansprüche, **dadurch gekennzeichnet,**
**dass** das Gehäuse (3, 4) einen metallischen Sockel (3) und eine mit diesem verbundene Kappe (4) aufweist, und
**dass** der Sockel (3) mit den isolierenden Durchführungen (7) für die Leitstifte (6) versehen ist.

## Claims

1. A gyroscopic sensor comprising:
- a sensing element (1) to which detection and excitation electrodes (8) are associated;
- conductive rods (6) connected in particular to said electrodes (8);
- a protective housing (3, 4) which encloses the sensing element (1) and the electrode (8) and which possesses insulating feed-throughs (7) for the conductive rods (6); and
- support means interposed between the sensing element (1) and the electrodes (8), on one part, and the housing (3, 4), on another part;
**characterized in that** said support means are constituted by the conductive rods (6) themselves, which are made so as to be elastically deformable.

2. A gyroscopic sensor according to claim 1, **characterized in that** it comprises:
- a resonator (1) in the form of a revolution bell or cap possessing an axial fixing stem (5); and
- an electrode carrier (2) which carries said detection and excitation electrodes (8), cooperating with the resonator (1), and which carries the resonator (1) via its fixing stem (5);
- said protective housing (3, 4) containing the resonator (1) and the electrode carrier (2);
and **in that** said conductive rods (6) forming the support means are interposed between the electrode carrier (2) and the housing (3, 4).

3. A gyroscopic sensor according to claim 2, **characterized in that** the conductive rods (6a) connected to the electrodes (8) are distributed symmetrically and circularly (10) around the stem (5) of the resonator (1).

4. A gyroscopic sensor according to claim 2 or 3, **characterized in that** it further comprises three conductive rods (6b, 6c, 6d) that are symmetrically distributed in the vicinity of the stem (5) of the resonator (1), one of these rods (6b) being connected to a guard ring (9) provided on the electrode carrier (2) and another of these rods (6c) being connected to a metallization of the resonator (1).

5. A gyroscopic sensor according to any preceding claim, **characterized in that** the housing (3, 4) comprises a metal base (3) and a cover (4) secured thereto, and **in that** the base (3) is provided with said insulating feed-throughs (7) for the conductive rods.
